# EUROPEAN PATENT SPECIFICATION

(11) **EP 4 212 747 B1**
(45) Date of publication and mention of the grant of the patent: **03.06.2026**
(21) Application number: 21866689.9
(22) Date of filing: 03.09.2021
(51) Int. Cl.: F16C 19/06, F16C 33/38, F16C 33/66

(54) **RESIN-MADE CAGE FOR BALL BEARING AND BALL BEARING**
KÄFIG AUS HARZ FÜR KUGELLAGER UND KUGELLAGER
CAGE EN RÉSINE POUR ROULEMENT À BILLES ET ROULEMENT À BILLES

(30) Priority: 11.09.2020 JP 2020153066
(43) Date of publication of application: 19.07.2023
(73) Proprietor: NSK Ltd., Tokyo 141-8560 (JP)
(72) Inventor: TORII Keisuke, Fujisawa-shi, Kanagawa 251-8501 (JP)
(74) Representative: Grünecker Patent- und Rechtsanwälte PartG mbB
(86) International application number: PCT/JP2021/032553
(87) International publication number: WO 2022/054730

(56) References cited:
- DE-A1- 102017 126 701
- GB-A- 2 156 912
- JP-A- 2006 258 172
- JP-A- 2007 198 583
- JP-A- 2007 285 506
- JP-A- 2015 187 494
- JP-A- S60 227 014
- JP-U- S6 031 523

## Description

### TECHNICAL FIELD

The present invention relates to a ball bearing resin cage and a ball bearing, and particularly to a ball bearing resin cage and a ball bearing that can be applied to motors, home electric appliances, and the like that require high quietness in the grease lubrication.

### BACKGROUND ART

As a ball bearing resin cage in the related art, there is known a cage in which a pair of elements each including a rim portion and a raw column portion are combined with each other, and an engaged portion and an engaging portion of each of the raw column portions are engaged with each other in a state in which both rim portions are prevented from being displaced in a direction away from each other, thereby improving the strength of the cage (see Patent Literature 1). In addition, as a high-speed rotation application, there is known a device in which a lid body is attached to a cage body and the cage body is prevented from being deformed due to the centrifugal force (see Patent Literature 2).

Document GB2156912A discloses a similar ball bearing cage showing the features of the preamble of claim 1.

### CITATION LIST

### PATENT LITERATURE

Patent Literature 1: JP2007-285506A
Patent Literature 2: JPH06-1848U

### SUMMARY OF INVENTION

### TECHNICAL PROBLEM

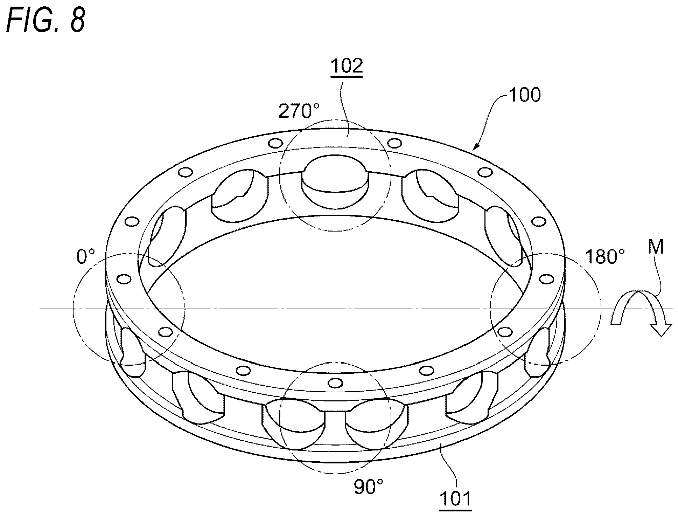

In the cage described in Patent Literature 1, the cage can freely move in the range of the gap between a ball and the cage in the axial direction, the cage can freely move in the range of the gap between the ball and the cage in the radial direction in the case in which the cage is of a ball guide type, the cage can freely move in the range of the gap between an inner ring and the cage in an inner ring guide type, and the cage can freely move in the range of the gap between an outer ring and the cage in an outer ring guide type. For example, when the inner ring is misaligned due to the misalignment of a shaft and the cage moves in a misalignment direction accordingly, at least one ball comes into contact with a first element due to the impact, and the other balls come into contact with a second element to generate, in the engaging portion, a stress acting on the separation of the engaging portion. For example, as shown in FIG. 8, when a cage 100 is misaligned as indicated by an arrow M with a pocket (a pocket at a 0° position and a column at a 180° position when the number of pockets is an odd number) at the 0° position and the 180° position as an axis, the ball comes into contact with a first element 101 at a pocket (a pocket located at around 90° when the number of pockets is an odd number) at a 90° position, and the ball comes into contact with a second element 102 at a pocket (a pocket located at around 270° when the number of pockets is an odd number) at a 270° position. At this time, since the direction of the force received by the first element 101 from the ball and the direction of the force received by the second element 102 from the ball are opposite to each other, the stress acting on the separation of the engaging portion may be generated in the engaging portion.

When a radial load is applied to the bearing, in the load generation range (the load zone) in which the radial load is applied, the rotation speed of the ball near the inlet and the outlet of the load zone is low, and the rotation of the ball in the load zone is accelerated. Therefore, there is a difference in the speed of revolution in the ball in the same bearing. In this situation, the event occurs in which the cage stretches in the circumferential direction due to the ball having a high revolution speed and the ball having a low revolution speed. For example, when the event occurs in a state in which the misalignment occurs in the cage 100 as described above, the ball having a high revolution mainly pushes the first element 101, and the ball having a low revolution mainly pushes the second element 102. Accordingly, the stress acting on the separation of the engaging portion may be generated in the engaging portion.

Therefore, there has been a problem in that it is necessary to secure the size for providing the strength that does not separate the engaging portion, the number of balls is forced to be reduced, and when the number of balls is maintained, the ball diameter is forced to be reduced, a reduction in the load capacity of the bearing is caused, and the design of the cage is limited.

In Patent Literature 2, the ball may also come into contact with the lid body, and in this case, the same problem is present.

The present invention has been made in view of the above-described problem, and an object of the present invention is to provide a ball bearing resin cage and a ball bearing that can prevent the generation of the stress separating the engagement of the first cage element and the second cage element engaged with each other, that can reduce the size of the engaging portion, and that has a high degree of freedom in design of the cage.

### SOLUTION TO PROBLEM

The above-described object of the present invention is achieved by the following configurations.
(1) A ball bearing resin cage in which a first cage element formed of a synthetic resin and formed in an annular shape and a second cage element formed of a synthetic resin and formed in an annular shape are combined in an axial direction,
   in which the first cage element includes a plurality of pocket portions that form a plurality of pocket surfaces rollably holding a ball and that are provided at an equal interval in a circumferential direction, and a plurality of first coupling portions that couple the adjacent pocket portions to each other,
   in which the second cage element includes a plurality of pocket facing portions that face the plurality of pocket surfaces in the axial direction in a manner of covering openings of the plurality of pocket surfaces, and a plurality of second coupling portions that couple the adjacent pocket facing portions to each other,
   in which each pocket portion of the first cage element includes a pair of protruding portions that protrude from the first coupling portion toward the second cage element, that face each other in the circumferential direction, and that form the pocket surface,
   in which the first cage element and the second cage element are combined by engaging an engaging portion formed on one of the first coupling portion and the second coupling portion with an engaged portion formed on the other of the first coupling portion and the second coupling portion,
   in which the pocket facing portion of the second cage element includes an inner surface that faces the ball at a distance, and
   in which the ball is held only by the pocket surface of the first cage element.
(2) A grease-lubricated ball bearing including:
   an inner ring having an inner ring raceway on an outer peripheral surface of the inner ring;
   an outer ring having an outer ring raceway on an inner peripheral surface of the outer ring; and
   a plurality of balls rollably held by a cage between the inner ring raceway and the outer ring raceway,
   in which the cage is the ball bearing resin cage according to (1).

### ADVANTAGEOUS EFFECTS OF INVENTION

According to the ball bearing resin cage and the ball bearing in the present invention, since the ball is held only by the pocket surface of the first cage element, it is possible to prevent the change in the pocket gap due to the displacement of the engaging portion between the first cage element and the second cage element, and it is possible to prevent the generation of the stress separating the engagement between the first cage element and the second cage element. Therefore, it is possible to reduce the size of the engaging portion and to increase the degree of freedom in design of the cage.

### BRIEF DESCRIPTION OF DRAWINGS

FIG. 1 is a partial cross-sectional view of a ball bearing.
FIG. 2 is a perspective view of a ball bearing resin cage shown in FIG. 1.
FIG. 3 is an exploded partially enlarged side view of the ball bearing resin cage shown in FIG. 2.
FIG. 4 is an explanatory diagram showing the heights of a pair of protruding portions.
FIG. 5 is an explanatory diagram showing an angle α formed between a virtual line A passing through a contact point between the center of a ball and the tip of the protruding portion and a virtual vertical plane B passing through the center of the ball when the ball is in contact with the tip of the protruding portion.
FIG. 6 is an explanatory view showing a state in which the cage is displaced in the axial direction with respect to the ball, as compared with a neutral state.
FIG. 7 is an enlarged perspective view showing a part of the cage in a broken manner.
FIG. 8 is a perspective view showing a case in which the misalignment occurs in a cage in the related art.

### DESCRIPTION OF EMBODIMENTS

Hereinafter, an embodiment of a ball bearing resin cage and a ball bearing according to the present invention will be described in detail with reference to the drawings. The ball bearing according to the present embodiment is used at, for example, a rotational speed of 3,000 min⁻¹ to 30,000 min⁻¹, and particularly preferably used for a machining center or a lathe.

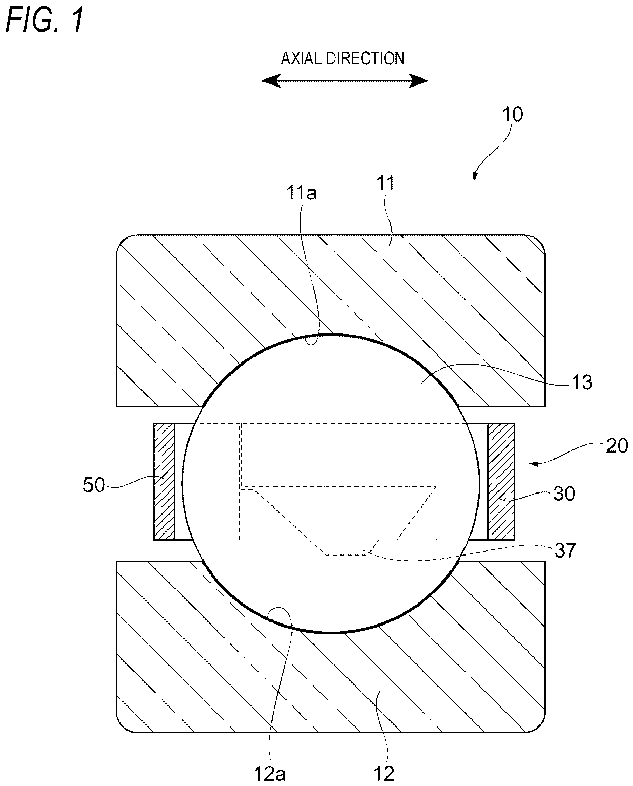

As shown in FIG. 1, the ball bearing 10 according to the present embodiment includes an outer ring 11 including an outer ring raceway 11a on the inner peripheral surface of the ball bearing 10, an inner ring 12 including an inner ring raceway 12a on the outer peripheral surface of the ball bearing 10, and a plurality of balls 13 rollably provided between the outer ring raceway 11a and the inner ring raceway 12a. The outer ring 11 and the inner ring 12 are provided concentrically. The balls 13 are lubricated by grease sealed in a bearing space. The outer ring 11, the inner ring 12, and the balls 13 are each formed of a steel material such as an alloy steel.

The plurality of balls 13 are rollably held at a predetermined pitch by a ball bearing resin cage (hereinafter, also simply referred to as a cage) 20. The cage 20 is formed by injection molding synthetic resin. The cage 20 has a configuration in which a first cage element 30 and a second cage element 50 are combined in the axial direction. The detailed structures of the first cage element 30 and the second cage element 50 will be described in detail later.

A seal member (not shown) may be provided on both axial sides of the space between the outer ring 11 and the inner ring 12 to seal the grease inside the bearing, or to prevent dust or foreign matters floating outside from entering the inside of the bearing. Examples of the seal member include a contact type seal member that is attached and fixed to the outer ring 11 and whose lip portion is in sliding contact with the inner ring 12, a non-contact type seal member that forms a labyrinth with the inner ring 12, and a seal member that is attached and fixed to the inner ring 12. The seal member may be provided only on one side in the axial direction or may not be provided.

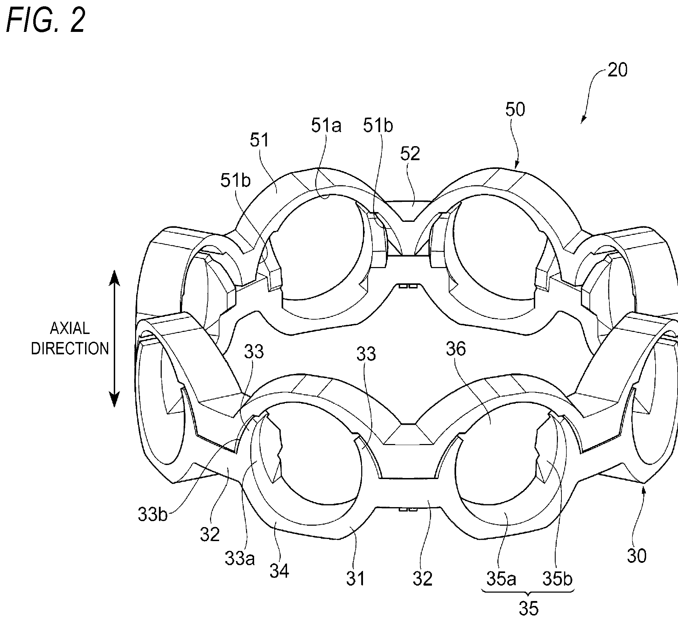

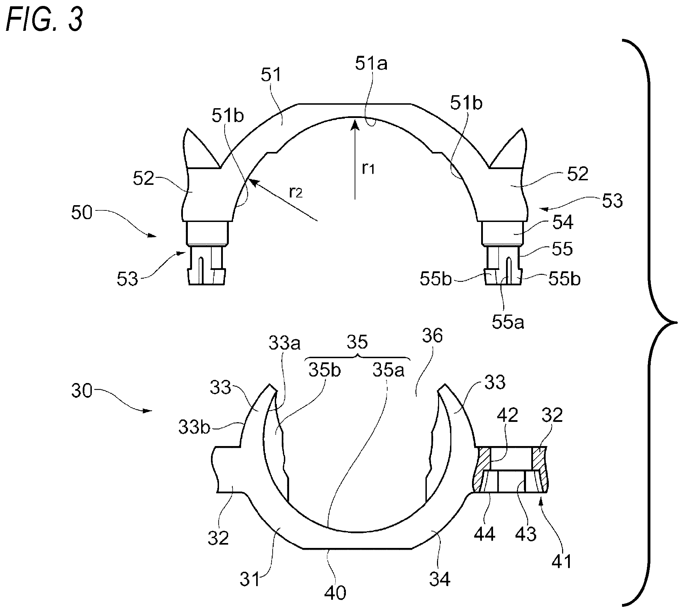

FIG. 2 is a perspective view of a ball bearing resin cage. FIG. 3 is an exploded partially enlarged side view of the ball bearing resin cage. In the ball bearing resin cage 20, the first cage element 30 and the second cage element 50 are combined in the axial direction.

As the resin material of the cage 20, a simple substance of an engineering plastic such as polyamide resin (nylon 6, nylon 66, nylon 46), polyacetal resin, polyetheretherketone resin (PEEK), polyphenylene sulfide resin (PPS), or polytetrafluoroethylene (PTFE), or a composite material reinforced by containing approximately 10% to 40% by weight of a short fiber (a reinforcing material) such as a glass fiber or a carbon fiber in the simple substance is used.

The first cage element 30 includes a plurality of pocket portions 31 that form a plurality of pocket surfaces 35 rollably holding the balls 13 and that are provided at equal intervals in the circumferential direction, and a plurality of first coupling portions 32 that couple the adjacent pocket portions 31 to each other at an axially intermediate portion of the pocket portion 31.

Each pocket portion 31 includes a pair of protruding portions 33 that protrude from the first coupling portion 32 toward the second cage element 50 and that face each other in the circumferential direction, and a substantially arcuate portion 34 that protrudes from the first coupling portion 32 toward the side opposite to the second cage element 50 side and that connects the pair of protruding portions 33 in an arcuate shape. The pair of protruding portions 33 and the substantially arcuate portion 34 constitute the pocket surface 35.

The pocket surface 35 includes a cylindrical surface 35a that is smoothly continuous over the pair of protruding portions 33 and the substantially arcuate portion 34, and a pair of tapered surfaces 35b that are formed on the inner diameter side of the pocket surface 35 from the pair of protruding portions 33 to the substantially arcuate portion 34 and that are inclined toward the center of the pocket toward the inner diameter side. The pocket portion 31 has an opening 36 that opens toward the one side (the second cage element 50 side) in the axial direction.

The pair of tapered surfaces 35b are a part of a virtual cone, and when the first cage element 30, that is, the cage 20 and the balls 13 are relatively displaced in the radial direction (the direction perpendicular to the paper surface in FIG. 3), the balls 13 and the tapered surface 35b come into contact with each other, so that the positions of the balls 13 and the first cage element 30 in the radial direction are restricted. In other words, when the first cage element 30 moves outward in the radial direction, that is, when the balls 13 move relatively inward in the radial direction, the tapered surfaces 35b of the first cage element 30 come into contact with the balls 13, and the relative radial positions of the tapered surfaces 35b and the balls 13 are restricted.

Therefore, when the cage 20 is displaced in the radial direction, the balls 13 come into contact with the tapered surfaces 35b. Therefore, the contact surface pressure can be reduced without edge contact, and the scraping of grease can be prevented. Since the contact with the balls 13 is limited to the tapered surfaces 35b and the friction coefficient is stabilized, it is possible to prevent the cage sound from being generated due to self-excited vibration of the cage 20.

On the other hand, since the outer diameter side (the front side in FIG. 3) of the first cage element 30 does not have a tapered surface, a gap is secured between the ball 13 and the cylindrical surface 35a, and the grease can be supplied from the gap.

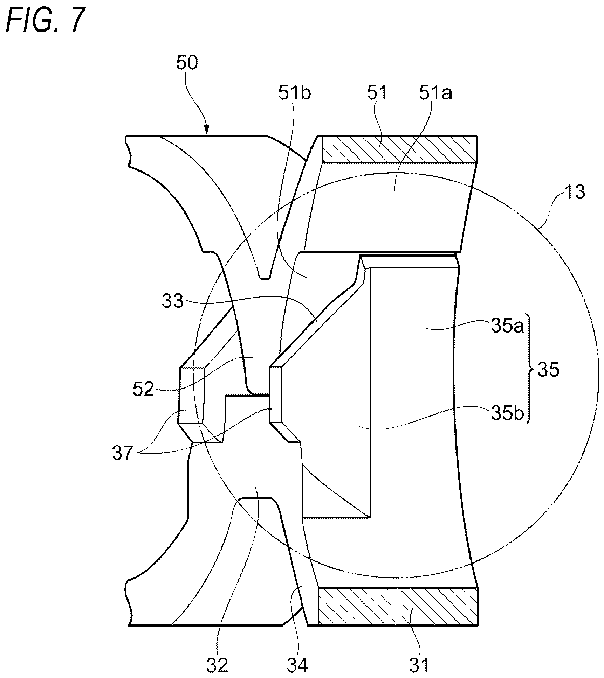

In the present embodiment, as shown in FIG. 7, a part of the tapered surface 35b is formed by a protruding portion 37 that is continuous from the inner circumferential surface of the first coupling portion 32 and that protrudes from the inner peripheral surface toward the inner diameter side, and the protruding portion 37 protrudes toward the inner diameter side from the inner peripheral surface of a second coupling portion 52 of the second cage element 50 to be described later. As shown in FIG. 1, since the protruding portion 37 faces an inner ring raceway surface 12a, the contact position between the balls 13 and the tapered surfaces 35b can be shifted toward the inner diameter side while the contact between the cage 20 and the inner ring raceway surface 12a is prevented by the protruding portion 37. As a result, when the first cage element 30 moves outward in the radial direction and the balls 13 move relatively inward in the radial direction with respect to the cage 20, biting of the balls 13 into the pair of tapered surfaces 35b due to the wedging action can be prevented, and the problem at the contact point between the balls 13 and the tapered surface 35b can be prevented. In particular, when the lubricity is temporarily lowered and the friction coefficient is increased under the condition of high speed rotation or high bearing temperature, the effect can be more effectively exhibited.

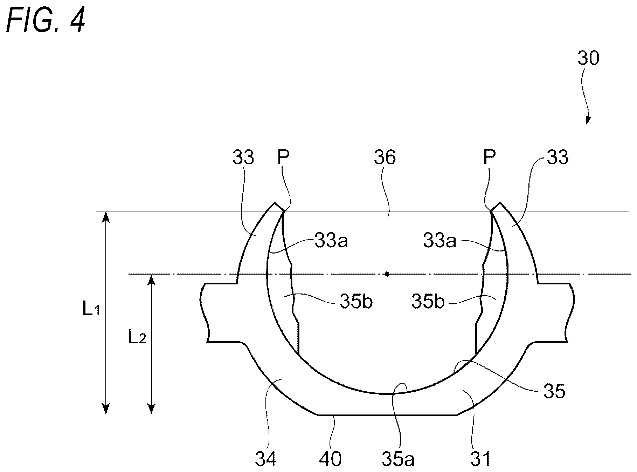

With reference to FIG. 4, it is preferable that a distance L1 between one side surface 40 of the first cage element 30 and a tip P of an inner peripheral surface 33a of the protruding portion 33 is longer than a distance L2 between the side surface 40 of the first cage element 30 and the maximum circumferential dimension position of the pocket surface 35 and shorter than 1.5 times the distance L2.

The distance L1 between the side surface 40 of the first cage element 30 and the tip P of the inner peripheral surface 33a of the protruding portion 33 is longer than the distance L2 between the side surface 40 of the first cage element 30 and the maximum circumferential dimension position of the pocket surface 35. The balls 13 are held only by the pocket surface 35 of the first cage element 30 and do not drop out of the pocket surface 35. Accordingly, the appropriate movement amount of the balls 13 can be secured, and the contact between the balls 13 and the second cage element 50 is prevented. Therefore, it is possible to prevent the first cage element 30 from being forced out of the engagement with the second cage element 50. The distance L1 is shorter than 1.5 times the distance L2. Accordingly, during the manufacturing of the cage, it is possible to prevent the occurrence of the stress concentration equal to or larger than the material limit, which causes damage when the cage is forced out of the mold.

In a bearing having a general inner diameter/outer diameter/width dimension according to the JIS standard, for the pair of protruding portions 33, it is preferable that the distance L1 between the one side surface 40 of the first cage element 30 and the tip P of the inner peripheral surface 33a of the protruding portion 33 is 1.2 times or more the distance L2 between the side surface 40 of the first cage element 30 and the maximum circumferential dimension position of the pocket surface 35. This is because, considering the appropriate thickness of the cage in consideration of the strength design of the cage 20 while securing the bearing width conforming to the JIS standard, if the distance L1 is shorter than 1.2 times the distance L2, the balls 13 come into contact with the second cage element 50.

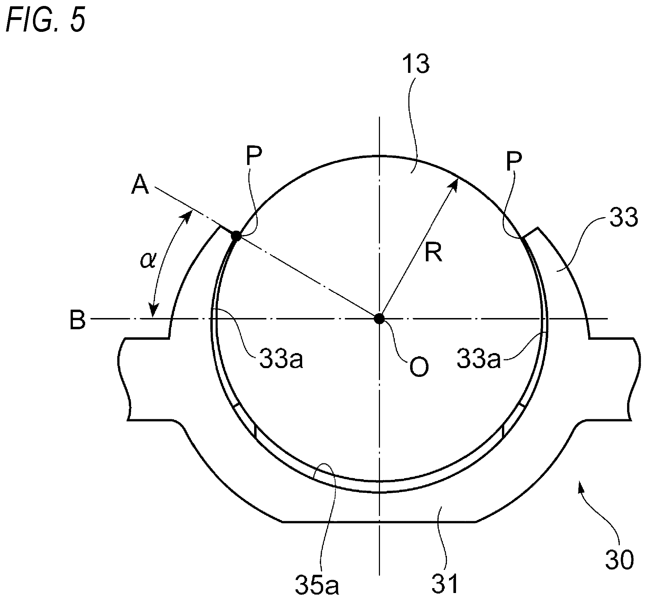

On the other hand, the "wedge action" may occur in which the balls 13 are caught in the protruding portions 33 and cannot be pulled out. In order to prevent this "wedge action", as shown in FIG. 5, when a contact point between the ball 13 and the tip of the inner peripheral surface 33a of the protruding portion 33 of the first cage element 30 is represented by P, the center of the ball 13 at this time is represented by O, a virtual line passing through the two points P and O is represented by A, and a virtual vertical plane passing through the center O of the ball 13 and perpendicular to the radial direction is represented by B, it is necessary to set the angle α formed between the virtual line A and the virtual vertical plane B to be larger than a friction angle λ (tank = µ) determined based on the friction coefficient µ at the contact point P.

For example, when the cage material is formed of polyamide resin, the friction coefficient µ between the ball (the iron-based material) and the cage 20 is 0.2 to 0.25. Therefore, it is sufficient to set λ and α such that λ = 11.3° to 14° and α > 14° are satisfied. By setting the angle α to be larger than the friction angle λ in this way, even if the balls 13 are caught in the protruding portions 33 due to the wedge effect, the cage 20 can return to the original rotation neutral position when the force of pressing the balls 13 against the contact point P is eliminated.

Referring back to FIG. 3, each first coupling portion 32 is formed with an engaged portion 41 to be engaged with an engaging portion 53 of the second cage element 50. The engaged portion 41 has a cylindrical hole portion 42, a rectangular hole 43 which is an engaging hole formed continuously with the cylindrical hole portion 42, and an engaging surface 44 formed at the opening of the rectangular hole 43. The engaging hole is not limited to the rectangular hole 43, and may have another shape corresponding to the axial shape of the engaging portion 54.

As shown in FIGS. 2 and 3, the second cage element 50 includes a plurality of pocket facing portions 51 having a substantially arc shape and facing the plurality of pocket surfaces 35 in the axial direction in a manner of covering the openings 36 of the plurality of pocket surfaces 35, and a plurality of second coupling portions 52 coupling the adjacent pocket facing portions 51 to each other.

The inner peripheral surface of the pocket facing portion 51 includes a partial cylindrical surface 51a that faces the pocket surface 35 in the axial direction, and a pair of recesses 51b that are formed on both sides of the partial cylindrical surface 51a, that face the pair of protruding portions 33 in the axial direction and in the circumferential direction, and that are recessed toward the outer diameter side with respect to the partial cylindrical surface. The pair of recesses 51b accommodate the pair of protruding portions 33 and cover the outer peripheral surfaces 33b of the pair of protruding portions 33.

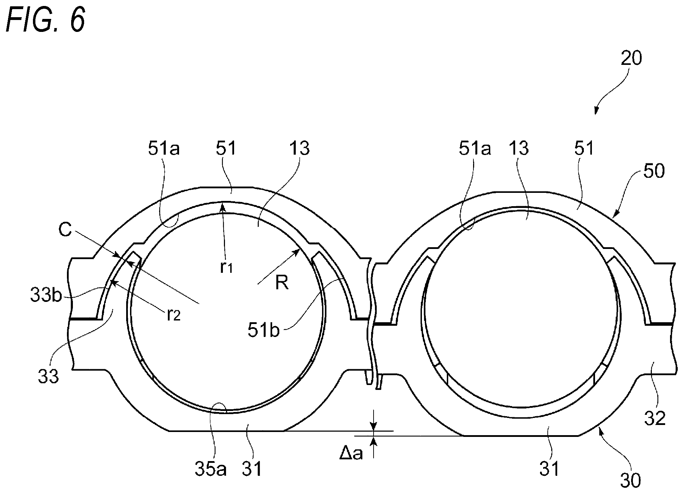

Referring also to FIG. 6, a curvature radius r1 of the partial cylindrical surface 51a is set to be larger than the sum (R + Δa) of a radius R of the ball 13 and an axial movement amount Δa in the direction (the downward direction in FIG. 6) in which the cage 20 is separated from the ball 13 in the state (the neutral state). In the state, the center of the pocket surface 35 and the center O of the ball 13 coincide with each other. Accordingly, in a design (that is, in the design dimensions of the balls 13 and the cage 20, or in the dimensions of these products) in which the balls 13 and the cage 20 are regarded as rigid bodies, even when the cage 20 moves in the direction away from the balls 13, the balls 13 do not come into contact with the second cage element 50 (the partial cylindrical surface 51a). Preferably, even during the bearing rotation, the balls 13 do not come into contact with the second cage element 50 (the partial cylindrical surface 51a). Accordingly, it is possible to prevent the first cage element 30 from being forced out of the engagement with the second cage element 50.

Even if an excessive deformation force is applied to the cage 20 and the balls 13 slightly come into contact with the second cage element 50 (the partial cylindrical surface 51a), such as the case in which an impact load is generated or the case in which an excessive centrifugal force is applied to the cage during the bearing rotation, such a contact state falls within the scope of the present invention as long as the contact state is not to the extent that the cage elements 30 and 50 separate from each other.

The pocket facing portion 51 is not limited to the partial cylindrical surface 51a formed of a single arc, as long as the pocket facing portion 51 is an inner surface that faces the balls 13 at a distance regardless of the relative movement of the cage 20 with respect to the balls 13. For example, the inner surface of the pocket facing portion 51 may be a variable curvature curved surface exceeding the radius R of the ball 13 or a spherical surface having a curvature radius exceeding the radius R of the ball 13, and a gap larger than the axial movement amount Δa of the cage 20 may be secured between the inner surface of the pocket facing portion 51 and the balls 13. Accordingly, even when the cage 20 moves in the misalignment direction, all of the plurality of balls 13 are held in contact with only the first cage element 30, in other words, the cage 20 holds the plurality of balls 13 only on the pocket surfaces 35 of the first cage element 30, and no stress acts on the separation between the engaging portion 53 and the engaged portion 41.

When the inner surface of the pocket facing portion 51 is the partial cylindrical surface 51a, the curvature radius r1 is preferably 1.08 times or more the radius R of the ball 13, and when the inner surface is a variable curvature curved surface or a spherical surface, it is more preferable that a gap of 2.5% or more of the radius R of the ball 13 is formed between the inner surface and the ball 13. Accordingly, even if the engagement between the first cage element 30 and the second cage element 50 is displaced, the balls 13 are held only by the first cage element 30, and thus the contact state between the balls 13 and the pocket surfaces 35 does not change. This displacement does not cause a step in the pocket surface 35, and it is possible to prevent the grease from being scraped off.

On the other hand, it is preferable that the gap allows the grease to be stored between the inner surface of the pocket facing portion 51 and the balls 13. Therefore, when the inner surface of the pocket facing portion 51 is the partial cylindrical surface 51a, the curvature radius r1 is preferably 1.1 times or less the radius R of the ball 13, and when the inner surface is a variable curvature curved surface or a spherical surface, it is more preferable that a gap of 5.5% or less of the radius R of the ball 13 is formed between the inner surface and the ball 13.

The inner diameter r2 of the pair of recesses 51b has a size in which a predetermined gap C (see FIG. 6) is secured between the outer peripheral surfaces 33b of the pair of protruding portions 33 and the surfaces of the pair of recesses 51b even when the first cage element 30 moves toward the second cage element 50 by the amount of axial backlash between the engaging portion 53 and the engaged portion 41. Accordingly, even if the first cage element 30 and the second cage element 50 are relatively displaced in the axial direction, the contact between the outer peripheral surface 33b of the protruding portion 33 and the surface of the recess 51b can be prevented. The size of the gap C is preferably set to 0.2 mm or more in consideration of the degree of displacement (the backlash in the entire direction between the engaging portion 53 and the engaged portion 41) between the first cage element 30 and the second cage element 50.

As shown in FIG. 3, each second coupling portion 52 is formed with the engaging portion 53 to be engaged with the engaged portion 41 of the first cage element 30. The engaging portion 53 includes a cylindrical shaft portion 54 protruding from the second coupling portion 52, and rectangular shafts 55 that are formed in a forked shape by a slit 55a extending in the axial direction and that can be elastically deformed in a direction of approaching or separating from each other. A pair of pawl portions 55b are provided at the tip portion of the rectangular shaft 55. Further, the rectangular shaft 55 is inserted into the rectangular hole 43 in a state of being elastically deformed by the slit 55a, and the pair of pawl portions 55b are expanded by the elastic force and are engaged to the engaging surface 44.

The cylindrical shaft portion 54 is fitted into the cylindrical hole portion 42 of the engaged portion 41 with a clearance of 0 or less. The tightness of the fitting portion between the cylindrical shaft portion 54 and the cylindrical hole portion 42 is preferably 0.0 mm or more and 0.4 mm or less, and more preferably 0.05 mm or more and 0.4 mm or less. Accordingly, when the cage 20 is assembled, the displacement between the first cage element 30 and the second cage element 50 is prevented, and the positioning of the first cage element 30 and the second cage element 50 is facilitated. Further, it is possible to prevent the fretting of the contact surface between the engaging surface 44 and the pair of pawl portions 55b engaged to the engaging surface 44, and it is possible to prevent the first cage element 30 and the second cage element 50 from rattling in the axial direction due to the wear of the pawl portions.

In assembling the ball bearing 10, the balls 13 are accommodated in the pocket surfaces 35, the first cage element 30 is provided between the outer ring raceway 11a and the inner ring raceway 12a, and the engaging portion 53 of the second cage element 50 is engaged with the engaged portion 41 of the first cage element 30. Specifically, in a state of being elastically deformed, the rectangular shaft 55 of the engaging portion 53 is inserted into the cylindrical hole portion 42 and the rectangular hole 43 of the engaged portion 41, the cylindrical hole portion 42 and the cylindrical shaft portion 54 are fitted to each other with a fitting clearance of 0 or less, and the pair of pawl portions 55b are engaged to the engaging surface 44 formed at the opening of the rectangular hole 43.

As described above, in the ball bearing 10 according to the present embodiment, the radius r1 of the partial cylindrical surface 51a of the second cage element 50 is set to be larger than the sum (R + Δa) of the radius R of the ball 13 and the axial movement amount Δa in the direction in which the cage 20 is separated from the balls 13, and the balls 13 are held only by the pocket surfaces 35 of the first cage element 30. Therefore, in the design (that is, in the design dimensions of the balls 13 and the cage 20, or in the dimensions of these products) in which the balls 13 and the cage 20 are regarded as rigid bodies, the balls 13 do not come into contact with the second cage element 50. Further, preferably, even during the bearing rotation, the balls 13 are held only by the pocket surfaces 35 of the first cage element 30, and do not come into contact with the second cage element 50. Accordingly, the stress acting in the separating direction is not generated on the engaged portion 41 of the first cage element 30 and the engaging portion 53 of the second cage element 50, the size of the engaging portion can be reduced, the degree of freedom in designing the cage can be increased, and the load capacity of the bearing can also be secured. Further, even when the engagement between the first cage element 30 and the second cage element 50 is displaced, the change in the pocket gap is reduced, the step in the pocket surface 35 is not generated, and the grease is not scraped off by the step.

Since the predetermined gap C is secured between the outer peripheral surfaces 33b of the pair of protruding portions 33 and the surfaces of the recesses 51b of the second cage element 50, even when the engagement between the first cage element 30 and the second cage element 50 is displaced, the shape of the pocket surface 35 implemented by the pair of protruding portions 33 is maintained, and the contact state between the balls 13 and the pocket surfaces 35 does not change.

The present invention is not limited to the embodiments described above, and modifications, improvements, and the like can be made as appropriate. The invention is defined by the appended claims.

For example, in the present embodiment, the first cage element 30 is provided with the engaged portion 41, and the second cage element 50 is provided with the engaging portion 53. However, the present invention is not limited thereto. The first cage element 30 may be provided with the engaging portion 53 and the second cage element 50 may be provided with the engaged portion 41.

However, as in the present embodiment, molding is easier with the configuration in which the first cage element 30 is provided with the engaged portion 41 and the second cage element 50 is provided with the engaging portion 53.

The pocket surfaces 35 are a combination of the cylindrical surface 35a and the tapered surface 35b. Alternatively, the pocket surfaces 35 can have a spherical shape.

As described above, the following matters are disclosed in the present specification.
(1) A ball bearing resin cage in which a first cage element formed of a synthetic resin and formed in an annular shape and a second cage element formed of a synthetic resin and formed in an annular shape are combined in an axial direction,
   in which the first cage element includes a plurality of pocket portions that form a plurality of pocket surfaces rollably holding a ball and that are provided at an equal interval in a circumferential direction, and a plurality of first coupling portions that couple the adjacent pocket portions to each other,
   in which the second cage element includes a plurality of pocket facing portions that face the plurality of pocket surfaces in the axial direction in a manner of covering openings of the plurality of pocket surfaces, and a plurality of second coupling portions that couple the adjacent pocket facing portions to each other,
   in which each pocket portion of the first cage element includes a pair of protruding portions that protrude from the first coupling portion toward the second cage element, that face each other in the circumferential direction, and that form the pocket surface,
   in which the first cage element and the second cage element are combined by engaging an engaging portion formed on one of the first coupling portion and the second coupling portion with an engaged portion formed on the other of the first coupling portion and the second coupling portion,
   in which the pocket facing portion of the second cage element includes an inner surface that faces the ball at a distance, and
   in which the ball is held only by the pocket surface of the first cage element.
   According to this configuration, since the ball is held only by the pocket surface of the first cage element, it is possible to prevent the change in the pocket gap due to the displacement between the first cage element and the second cage element, and it is possible to prevent the generation of the stress separating the engagement between the first cage element and the second cage element. Therefore, it is possible to reduce the size of the engaging portion and to increase the degree of freedom in design of the cage.
(2) The ball bearing resin cage according to (1),
   in which the engaging portion includes a cylindrical shaft portion protruding from either one of the coupling portions and an elastically deformable pawl portion formed at a tip portion of the engaging portion, and the engaging portion is formed in an axial shape,
   in which the engaged portion includes a cylindrical hole portion that is formed on the other of the coupling portions and that is fitted to the cylindrical shaft portion with a clearance of 0 or less, and an engaging hole through which the elastically deformed pawl portion is to pass, and
   in which the pawl portion of the elastically returned engaging portion is engaged to an engaging surface formed at an opening of the engaging hole.
   According to this configuration, the displacement between the first cage element and the second cage element is prevented, and the assembly of the first cage element and the second cage element is facilitated. Further, it is possible to prevent the fretting of the contact surface between the engaging surface and the pair of pawl portions engaged to the engaging surface, and the wear of the pawl portion is reduced.
(3) The ball bearing resin cage according to (1) or (2),
   in which each pocket facing portion of the second cage element covers outer peripheral surfaces of the pair of protruding portions of the first cage element and has a pair of recesses recessed from the inner surface, and
   in which a predetermined gap is formed between the outer peripheral surfaces of the pair of protruding portions of the first cage element and surfaces of the pair of recesses.
   According to this configuration, the predetermined gap is formed between the outer peripheral surfaces of the pair of protruding portions and the surfaces of the pair of recesses, the pair of protruding portions and the pair of recesses do not come into contact with each other, the shape of the pocket surface formed by the pair of protruding portions is maintained, and the contact state between the ball and the pocket surface is not changed.
(4) The ball bearing resin cage according to any one of (1) to (3),
   in which the inner surface of the pocket facing portion of the second cage element is a partial cylindrical surface having a curvature radius larger than a sum of a radius of the ball and an axial movement amount of the first cage element and the second cage element.
   According to this configuration, the surface of the pocket facing portion of the second cage element can be easily processed.
(5) A ball bearing including:
   an inner ring having an inner ring raceway on an outer peripheral surface of the inner ring;
   an outer ring having an outer ring raceway on an inner peripheral surface of the outer ring; and
   a plurality of balls rollably held by a cage between the inner ring raceway and the outer ring raceway,
   in which the cage is the ball bearing resin cage according to any one of (1) to (4).

According to this configuration, in the grease lubrication, it is possible to have high quietness even in the high-speed rotation use.

The present application is based on Japanese Patent Application No. 2020-153066 filed on September 11, 2020.

### REFERENCE SIGNS LIST

- 10: ball bearing
- 11: outer ring
- 11a: outer ring raceway
- 12: inner ring
- 12a: inner ring raceway
- 13: ball
- 20: ball bearing resin cage (cage)
- 30: first cage element
- 31: pocket portion
- 32: first coupling portion
- 33: protruding portion
- 33b: outer peripheral surface
- 35: pocket surface
- 36: opening
- 41: engaged portion
- 42: cylindrical hole portion
- 43: rectangular hole (engaging hole)
- 44: engaging surface
- 50: second cage element
- 51: pocket facing portion
- 51a: partial cylindrical surface
- 51b: recess
- 52: second coupling portion
- 53: engaging portion
- 54: cylindrical shaft portion
- 55b: pawl portion
- C: gap
- R: radius of ball
- Δa: axial movement amount of first cage element and second cage element

## Claims

1. A ball bearing resin cage (20) in which a first cage element (30) formed of a synthetic resin and formed in an annular shape and a second cage element (50) formed of a synthetic resin and formed in an annular shape are combined in an axial direction,
wherein the first cage element (30) includes a plurality of pocket portions (31) that form a plurality of pocket surfaces (35) rollably holding a ball (13) and that are provided at an equal interval in a circumferential direction, and a plurality of first coupling portions (32) that couple the adjacent pocket portions (31) to each other,
wherein the second cage element (50) includes a plurality of pocket facing portions (51) that face the plurality of pocket surfaces (35) in the axial direction in a manner of covering openings (36) of the plurality of pocket surfaces (35), and a plurality of second coupling portions (52) that couple the adjacent pocket facing portions (51) to each other,
wherein each pocket portion (31) of the first cage element (30) includes a pair of protruding portions (33) that protrude from the first coupling portion (32) toward the second cage element (50), that face each other in the circumferential direction, and that form the pocket surface (35),
wherein the first cage element (30) and the second cage element (50) are combined by engaging an engaging portion (53) formed on one of the first coupling portion (32) and the second coupling portion (52) with an engaged portion (41) formed on the other of the first coupling portion (32) and the second coupling portion (52),
wherein the pocket facing portion (51) of the second cage element (50) includes an inner surface (51a) that faces the ball (13) at a distance,
wherein the ball (13) is held only by the pocket surface (35) of the first cage element (30), and
wherein each pocket facing portion (51) of the second cage element (50) covers outer peripheral surfaces of the pair of protruding portions (33) of the first cage element (30), **characterized in that**
each pocket facing portion (51) of the second cage element (50) has a pair of recesses (51b) recessed from the inner surface (51a), and that
a predetermined gap (C) is formed between the outer peripheral surfaces of the pair of protruding portions (33) of the first cage element (30) and surfaces of the pair of recesses (51b).

2. The ball bearing resin cage (20) according to claim 1,
wherein the engaging portion (53) includes a cylindrical shaft portion (54) protruding from either one of the coupling portions and an elastically deformable pawl portion (55b) formed at a tip portion of the engaging portion (53), and the engaging portion (53) is formed in an axial shape,
wherein the engaged portion (41) includes a cylindrical hole portion (42) that is formed on the other of the coupling portions and that is fitted to the cylindrical shaft portion (54) with a clearance of 0 or less, and an engaging hole (43) through which the elastically deformed pawl portion (55b) is to pass, and
wherein the pawl portion (55b) of the elastically returned engaging portion is engaged to an engaging surface (44) formed at an opening of the engaging hole (43).

3. The ball bearing resin cage (20) according to claim 1 or 2,
wherein, in the pocket facing portion (51) of the second cage element (50), a surface facing the ball (13) at a distance is a partial cylindrical surface (51a) having a curvature radius (r1) larger than a sum of a radius (R) of the ball (13) and an axial movement amount (Δa) of the first cage element (30) and the second cage element (50).

4. A grease-lubricated ball bearing (10) comprising:
an inner ring (12) having an inner ring raceway (12a) on an outer peripheral surface of the inner ring (12);
an outer ring (11) having an outer ring raceway (11a) on an inner peripheral surface of the outer ring (11); and
a plurality of balls (13) rollably held by a cage (20) between the inner ring raceway (12a) and the outer ring raceway (11a),
wherein the cage (20) is the ball bearing resin cage (20) according to any one of claims 1 to 3.

## Patentansprüche

1. Kugellager-Kunststoffkäfig (20), bei dem ein erstes Käfigelement (30), das aus einem Kunststoff besteht und in einer Ringform ausgebildet ist, und ein zweites Käfigelement (50), das aus einem Kunststoff besteht und in einer Ringform ausgebildet ist, in einer axialen Richtung zusammengesetzt sind,
wobei das erste Käfigelement (30) eine Vielzahl von Taschenabschnitten (31), die eine Vielzahl von Taschenflächen (35) bilden, die eine Kugel (13) so halten, dass sie rollen kann, und die in einem gleichen Abstand in einer Umfangsrichtung angeordnet sind, sowie eine Vielzahl erster Verbindungsabschnitte (32) aufweist, die die benachbarten Taschenabschnitte (31) miteinander verbinden,
wobei das zweite Käfigelement (50) eine Vielzahl Taschen zugewandter Abschnitte, die der Vielzahl von Taschenflächen (35) in der axialen Richtung so zugewandt sind, dass sie Öffnungen (36) der Vielzahl von Taschenflächen (35) abdecken, sowie eine Vielzahl zweiter Verbindungsabschnitte aufweist, die die benachbarten der Taschen zugewandten Abschnitte (51) miteinander verbinden,
wobei jeder Taschenabschnitt (31) des ersten Käfigelementes (30) ein Paar vorstehender Abschnitte (33) aufweist, die von dem ersten Verbindungsabschnitt (32) auf das zweite Käfigelement (50) zu vorstehen, die einander in der Umfangsrichtung zugewandt sind und die die Taschenfläche (35) bilden,
wobei das erste Käfigelement (30) und das zweite Käfigelement (50) zusammengesetzt werden, in dem ein an dem ersten Verbindungsabschnitt (32) oder dem zweiten Verbindungsabschnitt (52) ausgebildeter aktiver Eingriffsabschnitt (53) mit einem passiven Eingriffsabschnitt (41) in Eingriff gebracht wird, der an dem anderen von dem ersten Verbindungsabschnitt (32) und dem zweiten Verbindungsabschnitt (52) ausgebildet ist,
wobei der einer Tasche zugewandte Abschnitt (51) des zweiten Käfigelementes (50) eine Innenfläche (51a) aufweist, die der Kugel (13) in einem Abstand zugewandt ist,
wobei die Kugel (13) nur von der Taschenfläche (35) des ersten Käfigelementes (30) gehalten wird, und
wobei jeder einer Tasche zugewandte Abschnitt (51) des zweiten Käfigelementes (50) Außenumfangsflächen der paarigen vorstehenden Abschnitte (33) des ersten Käfigelementes (30) abdeckt,
**dadurch gekennzeichnet, dass**
jeder einer Tasche zugewandte Abschnitt (51) des zweiten Käfigelementes (50) ein Paar Vertiefungen (51b) hat, die von der Innenfläche (51a) aus vertieft sind, und **dadurch, dass**
ein vorgegebener Zwischenraum (C) zwischen den Außenumfangsflächen der paarigen vorstehenden Abschnitte (33) des ersten Käfigelementes (30) und Flächen der paarigen Vertiefungen (51b) ausgebildet ist.

2. . Kugellager-Kunststoffkäfig (20) nach Anspruch 1,
wobei der aktive Eingriffsabschnitt (53) einen zylindrischen Schaftabschnitt (54), der von einem der Verbindungsabschnitte vorsteht, sowie einen elastisch verformbaren Klauenabschnitt (55b) aufweist, der an einem vorderen Abschnitt des Eingriffsabschnitts (53) ausgebildet ist, und der aktive Eingriffsabschnitt (53) in einer axialen Form ausgebildet ist,
wobei der passive Eingriffsabschnitt (41) einen zylindrischen Lochabschnitt (42), der an dem anderen der Verbindungsabschnitte ausgebildet ist und der mit einem Spiel von 0 oder weniger auf den zylindrischen Schaftabschnitt (54) aufgepasst ist, sowie ein Eingriffsloch (43) aufweist, durch das der elastisch verformte Klauenabschnitt (55b) hindurchtreten soll, und
wobei der Klauenabschnitt (55b) des elastisch zurückgefederten Eingriffsabschnitts mit einer Eingriffsfläche (44) in Eingriff kommt, die an einer Öffnung des Eingriffslochs (43) ausgebildet ist.

3. Kugellager-Kunststoffkäfig (20) nach Anspruch 1 oder 2,
wobei bei dem einer Tasche zugewandten Abschnitt (51) des zweiten Käfigelementes (50) eine der Kugel (13) in einem Abstand zugewandte Fläche eine teilzylindrische Fläche (51a) ist, die einen Krümmungsradius (r1) hat, der größer ist als eine Summe eines Radius (R) der Kugel (13) und eines Maßes (Δa) axialer Bewegung des ersten Käfigelementes (30) und des zweiten Käfigelementes (50).

4. Fettgeschmiertes Kugellager (10), das umfasst:
einen Innenring (12) mit einer Innenring-Laufbahn (12a) an einer Außenumfangsfläche des Innenrings (12);
einen Außenring (11) mit einer Außenring-Laufbahn (11a) an einer Innenumfangsfläche des Außenrings (11); sowie
eine Vielzahl von Kugeln (13), die von einem Käfig (20) so zwischen der Innenring-Laufbahn (12a) und der Außenring-Laufbahn (11a) gehalten werden, dass sie rollen können,
wobei der Käfig (20) der Kugellager-Kunststoffkäfig (20) nach einem der Ansprüche 1 bis 3 ist.

## Revendications

1. Cage en résine pour roulement à billes (20) dans laquelle un premier élément de cage (30) constitué dans une résine synthétique et consistant en une forme annulaire, et un deuxième élément de cage (50) constitué dans une résine synthétique et consistant en une forme annulaire sont combinés dans une direction axiale,
dans laquelle le premier élément de cage (30) inclut une pluralité de parties de poche (31) qui constituent une pluralité de surfaces de poche (35) maintenant en roulement une bille (13), et qui sont disposées à intervalle égal dans une direction circonférentielle, et une pluralité de premières parties de couplage (32) qui couplent les parties de poche adjacentes (31) l'une avec l'autre,
dans laquelle le deuxième élément de cage (50) inclut une pluralité de partie orientées vers une poche (51) qui sont orientées vers la pluralité de surfaces de poche (35) dans la direction axiale de manière à couvrir des ouvertures (36) de la pluralité de surfaces de poche (35), et une pluralité de deuxièmes parties de couplage (52) qui couplent les parties orientées vers une poche adjacentes (51) l'une avec l'autre,
dans laquelle chaque partie de poche (31) du premier élément de cage (30) inclut une paire de parties débordantes (33) qui débordent depuis la première partie de couplage (32) vers le deuxième élément de cage (50), qui sont orientées l'une vers l'autre dans la direction circonférentielle, et qui constituent la surface de poche (35),
dans laquelle le premier élément de cage (30) et le deuxième élément de cage (50) sont combinés en solidarisant une partie de solidarisation (53) constituée sur une de la première partie de couplage (32) et de la deuxième partie de couplage (52) avec une partie solidarisée (41) constituée sur l'autre de la première partie de couplage (32) et de la deuxième partie de couplage (52),
dans laquelle la partie orientée vers une poche (51) du deuxième élément de cage (50) inclut une surface intérieure (51a) qui est orientée vers la bille (13) à distance,
dans laquelle la bille (13) est maintenue uniquement par la surface de poche (35) du premier élément de cage (30), et
dans laquelle chaque partie orientée vers une poche (51) du deuxième élément de cage (50) couvre des surfaces périphériques extérieures de la paire de parties débordantes (33) du premier élément de cage (30),
**caractérisé en ce que**
chaque partie orientée vers une poche (51) du deuxième élément de cage (50) présente une paire de cavités (51b) en cavité depuis la surface intérieure (51a), et **en ce que**
un écart prédéterminé (C) est constitué entre les surfaces périphériques extérieures de la paire de parties débordantes (33) du premier élément de cage (30) et des surface de la paire de cavités (51b).

2. La cage en résine pour roulements à billes (20) selon la revendication 1,
dans laquelle la partie de solidarisation (53) inclut une partie d'arbre cylindrique (54) débordant depuis l'une des parties de couplage et une partie de cliquet élastiquement déformable (55b) constituée au niveau d'une partie d'extrémité de la partie de solidarisation (53), et la partie de solidarisation (53) consiste en une forme axiale,
dans laquelle la partie solidarisée (41) inclut une partie de trou cylindrique (42) qui est constituée sur l'autre des parties de couplage, et qui est fixée sur la partie d'arbre cylindrique (54) avec une garde de 0 ou moins, et un trou de solidarisation (43) à travers lequel la partie de cliquet élastiquement déformée (55b) doit passer, et
dans laquelle la partie de cliquet (55b) de la partie de solidarisation élastiquement retournée est solidarisée avec une surface de solidarisation (44) constituée au niveau d'une ouverture du trou de solidarisation (43).

3. La cage en résine pour roulements à billes (20) selon la revendication 1 ou 2,
dans laquelle, dans la partie orientée vers une poche (51) du deuxième élément de cage (50), une surface orientée vers la bille (13) à distance est une surface cylindrique partielle (51a) présentant un rayon de courbure (r1) plus important qu'une somme d'un rayon (R) de la bille (13) et une quantité de mouvement axiale (Δa) du premier élément de cage (30) et du deuxième élément de cage (50).

4. Roulement à billes lubrifié par une graisse (10) comprenant :
une bague intérieure (12) présentant une piste de bague intérieure (12a) sur une surface périphérique extérieure de la bague intérieure (12) ;
une bague extérieure (11) présentant une piste de bague extérieure (11a) sur une surface périphérique intérieure de la bague extérieure (11) ; et
une pluralité de billes (13) maintenue en roulement par une cage (20) entre la piste de bague intérieure (12a) et la piste de bague extérieure (11a),
dans lequel la cage (20) est la cage en résine pour roulement à billes (20) selon l'une quelconque des revendications 1 à 3.
